# EUROPEAN PATENT APPLICATION

(11) **EP 2 846 303 A1**
(43) Date of publication of application: **11.03.2015**
(21) Application number: 13784859.4
(22) Date of filing: 01.05.2013
(51) Int. Cl.: G06Q 30/06, H04W 4/02

(54) **METHOD FOR PROVIDING PRODUCT INFORMATION USING SMART PACKAGING SYSTEM**

(30) Priority: 01.05.2012 KR 20120045925
(71) Applicant: Korea Institute of Industrial Technology, Cheonan-si, Chungcheongnam-do 331-822 (KR)
(72) Inventor: SHIM, Jin Kie, Seoul 137-794 (KR); LEE, Sang Bong, Anyang-si Gyeonggi-do 431-050 (KR); LEE, Chang Kee, Seoul 133-070 (KR)
(74) Representative: Björk, Frida Magdalena
(86) International application number: PCT/KR2013/003771
(87) International publication number: WO 2013/165175

(57) **Abstract**

The present invention relates to a method for providing product information, including the steps of: (a) receiving, by a user terminal, a predetermined signal from the signal element of a product, and checking, by the user terminal, location information; (b) transmitting, by the user terminal, the received signal and the location information to a main server; (c) determining, by the main server, whether a genuine product signal corresponding to the transmitted signal is present and sale location information corresponding to the transmitted location information is present; and (d) if the corresponding genuine product signal and the corresponding sale location information are present, transmitting, by the main server, the product information of the product to the user terminal. According to the present invention, product information is provided to a user, purchase information is provided to a provider, and the forgery and illegitimate distribution of a product can be prevented.

## Description

### Technical Field

The present invention relates to a method for providing product information and, more particularly, to a method for providing product information using a smart packaging system, which is capable of providing product information to a user, providing the purchase information of the user to a provider and also preventing the forgery and illegitimate distribution of a product using a smart packaging system.

### Background Art

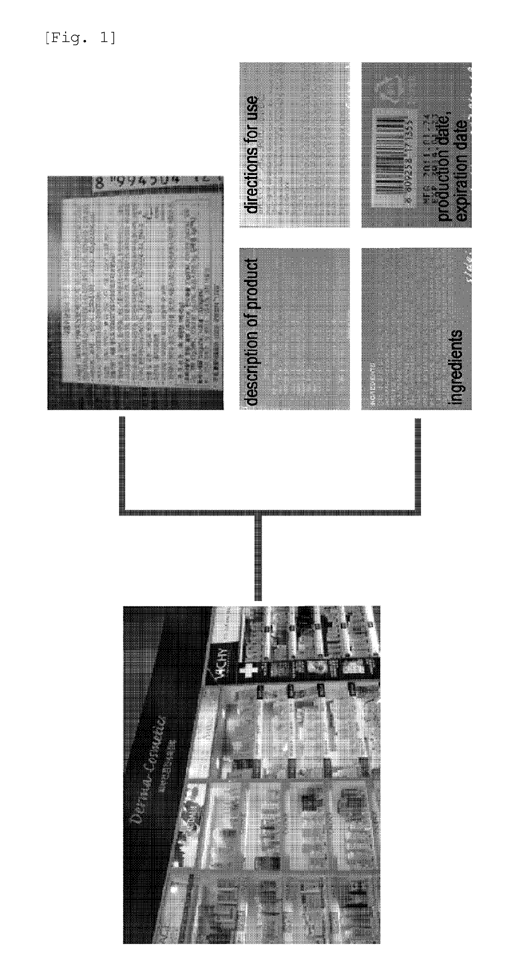

In the fabrication of the conventional product packaging, the protection of the products, the consideration of aesthetic values by way of design, economic efficiency, practicability, etc. are principal considerations. Accordingly, product information printed on the packaging itself is not efficiently provided to consumers. Fig. 1 shows a conventional method for providing product information via the packaging of a product.

The problems of the conventional method for providing product information by way of the product packaging are described in detail below.

First, the limited surface area is too small to print a variety of types of and a large amount of product information thereon.

Second, a method in which product information is printed is used, and thus a change in product information cannot be immediately incorporated when the change occurs.

Third, there are many cases where product information is printed on packaging in considerably small letters due to the spatial limitation, and thus immediacy in the recognition of information provided to consumers is poor.

Fourth, forgery is easy due to the use of a packaging surface print method.

Fifth, it is difficult to supply information about safety and a distribution history suitable for the characteristics of each product group, such as liquor, food, pharmaceuticals, cosmetic products, etc.

Sixth, it is difficult to identify products being illegitimately distributed for the evasion of taxes.

Seventh, it is impossible to provide information customized for an individual user. In this case, the customized information may refer to an allowable dosage per day in the case of pharmaceuticals.

Eighth, from the standpoint of a provider, it is impossible to place an advertisement that may influence a consumer at the crucial moment the consumer makes a purchase decision. In this case, the advertisement refers to various types of promotion, such as not only an image advertisement and a display advertisement, but also the provision of a discount coupon, in addition to packaging design.

In addition to the above-described problems, currently, an economic paradigm has shifted from a production-centric one to a marketing-centric one. With the integration with new technology (nano-technology, biotechnology, and information technology (IT)) and the popularization of smart phones, there arises a need for a new method for providing product information, which can be merged with product services (logistics, safety, and forgery prevention).

Some technologies that are capable of improving product service and then providing the improved product service based on a smart phone have been disclosed.

Japanese Laid-open Patent Publication No. 2003-044714 describes a method in which, when a vendor and a consumer input information about their desired products into a reservation system, a producer can manage planned production, shipping, and delivery based on the input information, and the consumer can provide effective information through the input of the evaluation of a product to the system. However, this technology is disadvantageous in that it is impossible to evaluate whether the product purchased by the consumer is genuine and whether the sale of the product, purchased by the consumer, in a corresponding area is legitimate.

Japanese Laid-open Patent Publication No. 2008-015582 describes a method for notifying a consumer of a legitimate consumable period by taking into account the state of a product during the distribution of the product. However, this technology is disadvantageous in that the technology can provide notification of only part of information that can be effectively used by a consumer and does not provide notification of any type of effective information to a producer.

Korean Laid-open Patent Publication No. 2010-0096510 describes a method that is capable of tracking a consumer who has finally consumed a product. This technology is effective for the prevention of forgery because it verifies a legitimate distribution path, but is disadvantageous in that useful information is not provided to a consumer.

Meanwhile, in connection with the distribution of a product, although in the case of specific products, such as liquor, areas where the corresponding products should be sold and used are prescribed by the law, it is very difficult to actually determine the areas of the products. For example, in the case of a product that should be sold in area "A," if the product is sold in area "B" via a few distribution channels, problems arise in that it is difficult for a provider to become aware of the situation and it is also difficult for a management agency to manage the situation.

### Disclosure

### Technical Problem

Accordingly, an object of the present invention that is intended to overcome the above-described problems is to provide a method for providing product information using a smart packaging system, which can recognize a signal attached to the packaging of a product using a terminal that can be easily possessed and accessed without the need for a separate reader and then compare the corresponding signal by communicating with a main server, thereby providing the normality, distribution history, etc. of the product to a consumer, and also providing the purchase information of the consumer to a provider, resulting in the provision of information, such as the exhaustion of inventory in a corresponding area, preferences, etc.

### Technical Solution

In order to accomplish the above object, the present invention provides a method for providing product information, including: step (a) of receiving, by a user terminal, a predetermined signal from the signal element of a product, and verifying, by the user terminal, location information; step (b) of transmitting, by the user terminal, the received signal and the location information to a main server; step (c) of determining, by the main server, whether a genuine product signal corresponding to the transmitted signal is present and sale location information corresponding to the transmitted location information is present; and step (d) of, if the corresponding genuine product signal and the corresponding sale location information are present, transmitting, by the main server, product information of the product to the user terminal.

Preferably, step (d) includes step (d') of, if the corresponding genuine product signal is present but the corresponding sale location information is not present, transmitting, by the main server, a distribution channel warning message to the user terminal.

Preferably, step (d) includes step (d") of, if the corresponding genuine product signal is not present but the corresponding sale location information is present, transmitting, by the main server, a forgery warning message to the user terminal.

Preferably, step (d) includes step (d"') of, if the corresponding genuine product signal and the corresponding sale location information are not present, transmitting, by the main server, both distribution channel and forgery warning messages to the user terminal.

Preferably, the method further includes, before step (a), step (0) of providing, by a provider terminal, a genuine product signal and sale location information to the main server.

Preferably, the method further includes, after step (d), step (e) of outputting the transmitted product information to the display unit of the user terminal, and the product information includes any one of a product description, warnings for use, ingredients, a production date, an expiration date, and an advertisement.

Preferably, the method further includes, after step (e), step (f) of transmitting, by the user terminal, information about whether the product has been purchased and location information of the product to a provider terminal.

Preferably, the method further includes, after step (d): step (e') of outputting the transmitted distribution channel warning message to a display unit of the user terminal; and step (f') of transmitting, by the user terminal, a product sale location change request to a provider terminal.

Preferably, the product is liquor, the signal is light radiated from a light-emitting diode (LED) light attached to the lid of the liquor bottle and the LED light emits light for a predetermined period in response to the initial opening of the liquor bottle. However, this is merely an example. The product is applicable to both industrial and consumer products. Applicable signals are not limited to the LED signal, but are varied.

Preferably, the method further includes, after step (d): step (g) of inquiring, through the main server, with the user terminal about content regarding provision of user information; step (h) of, if the user terminal transmits a consent signal to the main server in response to the inquiry, inquiring, by the main server, of the user terminal about the user information; step (i) of transmitting, by the user terminal, the user information to the main server; and step (j) of transmitting, by the main server, a coupon to the user terminal.

Preferably, step (i) includes the step of inputting the user information to the user terminal, and the step of transmitting the input user information to the main server.

Preferably, user information is previously input to and stored in the user terminal; and step (i) includes the step of verifying, by the user terminal, the previously input and stored user information for information corresponding to the user information inquired about at step (h), and the step of transmitting, by the user terminal, the corresponding information to the main server.

Preferably, the method further includes: step (k) of, if it is determined at step (d) that the corresponding genuine product signal and the corresponding sale location information are present, storing the location information in a user information database with the location information mapped to the product information of the product; and step (1) of, if the user terminal transmits a consent signal to the main server in response to the inquiry at step (h), storing the user information transmitted at step (i) in the user information database with the user information mapped to the product information of the product.

### Advantageous Effects

As described above, a variety of types of and a large amount of product information can be easily provided to a consumer, and a change in product information can be easily incorporated when the change occurs.

Furthermore, safety information and a distribution history relevant to the characteristics of each product group can be easily provided, and also information customized for each individual person can be easily provided.

Furthermore, a provider can collect the purchase information of the consumer, and thus the effect information of an advertisement and a sales promotion campaign and product sales can be managed in real time.

Furthermore, information useful to marketing to the provider can be provided. That is, any type of information, such as the purchase details of a user, and the location where a product has been actually used, the age and gender of a purchaser category who has actually used the product, etc., which could not be obtained using a conventional method, can be obtained under the consent of the user. In particular, a discount coupon etc., that can offer economic benefits is provided in order to obtain the consent of the user, and thus even larger amount of information can be obtained, thereby improving accuracy.

### Description of Drawings

Fig. 1 is a photo showing a conventional method for providing product information using product packaging;
Fig. 2 is a schematic diagram illustrating a method for providing product information using a smart packaging system according to the present invention;
Fig. 3 is a configuration diagram illustrating a user terminal and a main server;
Fig. 4 is a flowchart illustrating a method for providing product information using a smart packaging system according to the present invention;
Fig. 5 is a diagram illustrating a case where a product is liquor as an example; and
Fig. 6 is a flowchart illustrating a method for obtaining user information using a smart packaging system according to the present invention.

### Mode for Invention

A method for providing product information using a smart packaging system according to the present invention is described in detail below with reference to the accompanying drawings.

A product 100 may be liquor, food, a pharmaceutical product, a cosmetic product etc., but is not limited thereto. The product 100 may be one of any type of industrial and consumer product.

The product 100 may include a signal element 110. Preferably, the signal element 110 may be located on the outer surface of the product 100.

The signal element 110 may be, as an example, a color code, but it will be apparent to those having ordinary knowledge in the art that a hologram, a barcode, a QR code, a Radio Frequency Identification (RFID) element, a near field communication (NFC) element, etc may be used as the signal element 110.

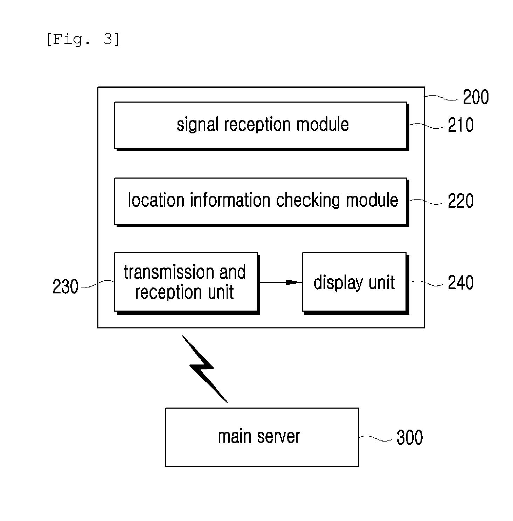

As illustrated in Fig. 3, as an example, a user terminal 200 may include a signal reception module 210, a location information verification module 220, a transmission and reception unit 230, and a display unit 240.

The user terminal 200 may be, as an example, a smart phone, providing the advantage of portability to a user. Furthermore, the smart phone is merely an example, and the user terminal 200 is not limited thereto. The user terminal 200 may be a specific terminal (not illustrated) that is provided in a shop or a sales stand for the product 100.

The signal reception module 210 functions to receive a predetermined signal from the signal element 110 of the product 100. The signal reception module 210 may be, as an example, a camera, but it will be apparent that the signal reception module 210 is not limited thereto.

The location information verifying module 220 functions to verify the current location information of the user terminal 200.

As an example, the location information checking module 220 may include a Global Positioning System (GPS) receiver and receive location information from GPS satellites. However, the location information verifying module 220 may be any type of device that is capable of verifying location information.

In this case, the location information that is verified is information about a location where a product has been actually used, rather than information about the location where the product has been sold. As described above, a provider can relatively easily verify information about the location where a product has been sold via a distributor etc., whereas it is not easy to verify information about a location where the product has been actually used. The reason for this is that a situation in which a user checks the signal of the product using the user terminal 200 may be viewed as occurring immediately before the use of the product.

As described above, the information about a location where the product has been actually used is information that cannot be easily obtained by the provider. When the corresponding information is accumulated, the provider can check more effective information about locations where his or her product has been used.

The transmission and reception unit 230 transmits and receives a predetermined signal from the signal element 110, location information, product information, an advertisement, etc. to and from the main server 300. The transmission and reception unit 230 may connect to the main server 300 in a wired or wireless manner.

The display unit 240 may output the received signal, the verified location information, status information, the product information, etc. In this case, the product information may include any one or more of a product description, warnings for use, ingredients, a production date, an expiration date, and an advertisement.

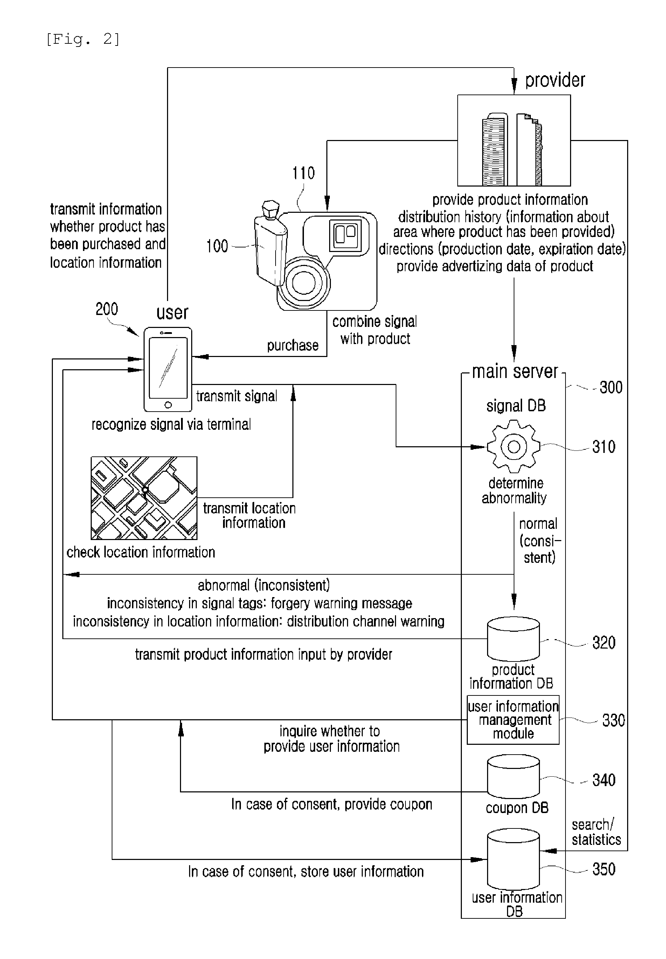

As an example, as illustrated in Fig. 2, the main server 300 may include a signal database 310, a product information database 320, a user information management module 330, a coupon database 340, and a user information database 350.

The signal database 310 stores a genuine product signal provided by a provider terminal (not illustrated), and determines whether there is a genuine product signal corresponding to the predetermined signal of the signal element 110 of the product 100 transmitted by the user terminal 200.

Furthermore, the signal database 310 stores sale location information provided by the provider terminal, and determines whether there is sale location information corresponding to the location information of the product 100 transmitted by the user terminal 200.

The product information database 320 stores the product information provided by the provider terminal. It has been already described that the product information may include any one or more of a product description, warnings for use, ingredients, a production date, an expiration date, and an advertisement.

The product information database 320 transmits product information to the terminal 200 if the signal database 310 determines that there is a genuine product signal corresponding to the predetermined signal from the signal element 110 transmitted by the user terminal 200 and also that there is sale location information corresponding to the location information transmitted by the user terminal 200.

The user information management module 330 functions to inquire of the user terminal 200 as to whether a user will provide his or her information, namely, user information, and then receive predetermined benefits, such as a coupon etc., and also functions to process information based on the results of the inquiry. The coupon database 340 manages a coupon that is provided to the user terminal 200 if the user information management module 330 determines that the user has consented to the provision of the user information.

In this case, "coupon" refers to not only a coupon based on its general meaning that functions to reduce the purchase price of the corresponding product 100, but also all types of exchange tickets that provide economic benefits that can be provided to the user, such as current or future discount benefits for a product other than the corresponding product 100, the direct payment of cash, etc. The coupon may be directly transmitted to the user terminal 200, or may be transmitted to a preset e-mail address, an actual address, etc.

The user information database 350 stores the user information received from the user terminal 200 if the user information management module 330 determines that the user has consented to the provision of the user information. In this case, the user information includes any type of information about the user. In an embodiment, the user information may include age and gender that may be information useful to the provider of the product 100.

In an embodiment, the user information may be information that the user directly inputs to the user terminal 200 when he or she determines to provide the user information. For this purpose, the user information management module 330 may perform the step of inquiring of the user terminal 200 whether the user terminal 200 will provide user information and the step of inquiring of the user terminal 200 about required user information (for example, age, gender, etc.) if it is determined that the user terminal 200 will provide the user information.

In another embodiment, the user information may be information previously stored in the user terminal 200. For this purpose, the user terminal 200 previously stores the user information using its own functionality or a separate application. When the user information management module 330 inquires of the user terminal 200 whether the user terminal 200 will provide the user information and also it is determined that the user terminal 200 will provide the user information, the previously stored user information is transmitted to the main server 300.

Additionally, not only the purchase details of the corresponding user but also information about a location where the product has been used may be stored in the user information database 350.

In summary, location information (that is, information about a location where a product has been actually used) and actual user information (for example, age, gender, etc) are stored in the user information database 350, with the location information and the actual user information being mapped to not only the purchase details of the corresponding user but also information about a specific product.

The provider terminal (not illustrated) may have the same structure as the user terminal, and may exchange signals and information with the main server 300 and the user terminal 200.

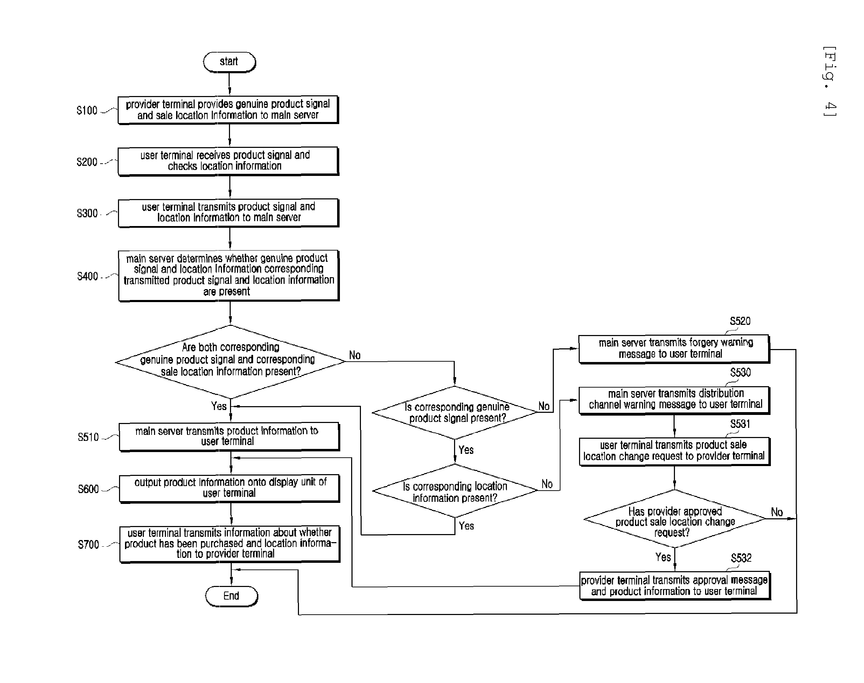

A method for providing product information using a smart packaging system according to the present invention is described in detail below with reference to Figs. 2 and 4.

As a first embodiment, a method for verifying the authenticity of a product and transmitting product information is described chiefly with reference to Fig. 4.

A provider provides a genuine product signal and sale location information to the main server 300 using the provider terminal at step S100. In this case, the provider terminal may be, for example, a smart phone, a computer etc., but may be any device that has an input unit and a transmission and reception unit.

The provided genuine product signal and sale location information are stored in the signal database 310 of the main server 300.

Furthermore, the step at which the provider provides product information to the main server 300 via the provider terminal may be further included. The product information provided as described above may be stored in the product information database 320.

The signal reception module 210 receives a predetermined signal from the signal element 110 of the product 100 and checks the current location information of the location information checking module 220 at step S200.

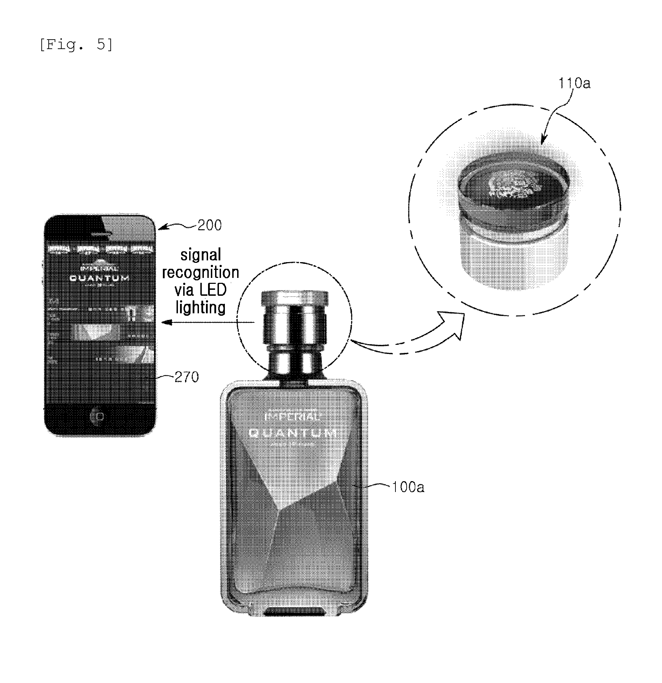

As an example, the product 100 may be liquor 100a, as illustrated in Fig. 5. The predetermined signal from the signal element 110 may be light radiated from a light emitting diode (LED) 110a attached to the lid of the liquor bottle 100a.

In this case, it is preferred that the LED 110a emits light for a predetermined period upon initial opening of the product. This can prevent the forgery of the liquor 100a that occurs frequently.

If it is determined that the liquor 100a is a genuine product and has been distributed via a legitimate distribution channel, the product information of the liquor 100a may be output, as shown on the display unit 270 of Fig. 5.

Thereafter, the transmission and reception unit 230 of the user terminal 200 transmits the predetermined signal and the location information, received from the signal element 110 at step S200, to the signal database 310 of the main server 300 at step S300.

At step S400, the signal database 310 checks whether a genuine product signal corresponding to the signal transmitted from the signal element 110 at step S300 is present in the signal database 310, and also checks whether sale location information corresponding to the location information transmitted at step S300 is present in the signal database 310.

In this case, if both a genuine product signal corresponding to the signal transmitted from the signal element 110 at step S300 and sale location information corresponding to the location information transmitted at step S300 are present in the signal database 310, the signal database 310 notifies the product information database 320 of normality (consistency).

The product information database 320 that has received a normality (consistency) notification from the signal database 310 transmits product information, corresponding to the signal from the signal element 110 and the location information transmitted at step S300, to the user terminal 200 via the transmission and reception unit 230 at step S510.

The user terminal 200 outputs the product information received via the transmission and reception unit 230 onto the display unit 240 at step S600.

The user may consult the output product information in order to determine whether to purchase the product 100, and the provider may include an advertisement in the output product information to help the user make a purchase.

When the user has purchased the product, the user terminal 200 transmits information about the purchase of the product 100 and information about the location where the product 100 has been purchased to the provider terminal at step S700. When the user does not purchase the product, his or her non-purchase and location information may be transmitted in the same manner.

Furthermore, at step S700, the purchase details of the user of the user terminal 200, information about a location where the product has been used, preference pattern data, etc. may be additionally transmitted. However, it will be apparent to those having ordinary knowledge that the step of determining whether the user consents to data transmission may be included prior to the above-described transmission. The purchase details and the location information transmitted as described above are stored in the user information database 350.

Furthermore, step S700 may be realized through the medium of the main server 300. That is, step S700 may be realized in a manner in which the user terminal 200 transmits information as to whether the product 100 has been purchased and location information to the main server 300 and the main server 300 transmits the transmitted information as to whether the product 100 has been purchased and the transmitted location information to the provider terminal.

Furthermore, during this process, the main server 300 may establish a per-user purchase propensity database (not illustrated) by storing the information about whether the product 100 has been purchased and the location information product 100, transmitted by the user terminal 200, in a cumulative manner. The per-user purchase propensity database established as described above may be provided to the provider.

Meanwhile, in another embodiment, after step S400, if a genuine product signal corresponding to the signal transmitted from the signal element 110 at step S300 is not present in the signal database 310 but sale location information corresponding to the location information transmitted at step S300 is present in the signal database 310, the main server 300 transmits a forgery warning message to the user terminal 200 at step S520.

Furthermore, if a genuine product signal corresponding to the signal transmitted from the signal element 110 at step S300 is present in the signal database 310 but sale location information corresponding to the location information transmitted at step S300 is not present in the signal database 310, the main server 300 transmits a distribution channel warning message to the user terminal 200 at step S530. In this case, the main server 300 may transmit the location information to the provider terminal.

Moreover, if a genuine product signal corresponding to the signal transmitted from the signal element 110 at step S300 is not present in the signal database 310, and sale location information corresponding to the location information transmitted at step S300 is not present in the signal database 310, the main server 300 transmits both forgery and distribution channel warning messages to the user terminal 200 at step S531.

After step S530, the user may transmit a product sale location change request to the provider terminal via the user terminal 200 at step S531.

If the provider who has received the product sale location change request approves the product sale location change request, the provider terminal may transmit an approval message and the product information of the product 100 to the user terminal 200 at step S532.

In contrast, if the provider does not approve the product sale location change request, the provider terminal outputs a message indicating (that) change of sale location is impossible and a risk message, and the method for providing product information according to the present invention may be terminated.

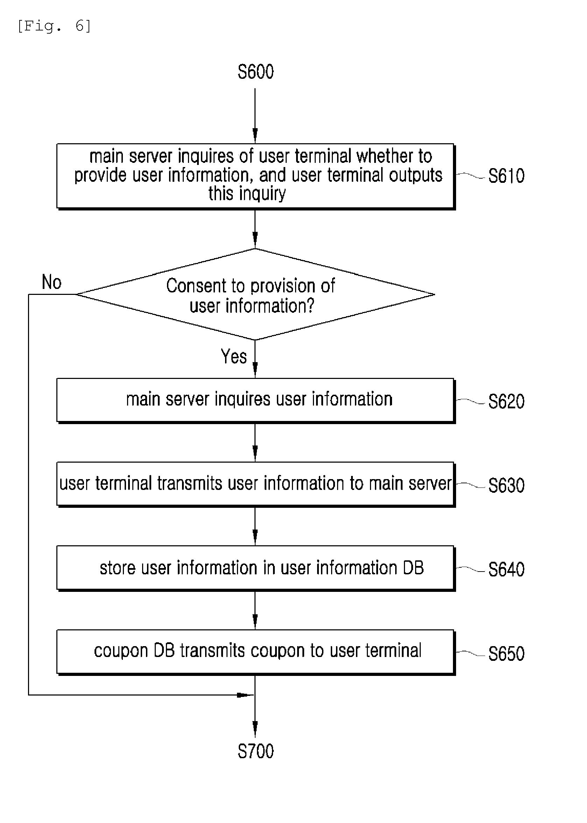

As a second embodiment, a method by which a provider obtains user information is described with reference to Fig. 6.

The second embodiment may be performed along with or separate from the first embodiment described with reference to Fig. 4. The case where the second embodiment is performed along with the first embodiment is described as an example below.

At step S600, the user terminal 200 outputs the product information, received from the main server 300 via the transmission and reception unit 230, onto the display unit 240. In this case, the user terminal 200 also outputs an inquiry about whether to consent to the provision of user information offered from the user information management module 310 of the main server 300 at step S610.

If the user does not consent to the provision of user information and inputs his or her intention to the user terminal 200, the user terminal 200 transmits a signal representative of dissent to the main server 300, and accordingly the main server 300 transmits only information about whether the product has been purchased and location information to the main server 300 without any other additional procedure at step S700.

If the user consents to the provision of user information and inputs his or her intention to the user terminal 200, a consent signal representative of the intention is transmitted from the user terminal 200 to the main server 300, and accordingly the user information management module 310 of the main server 300 inquires of the user terminal 200 about user information at step S620.

The user inputs inquired user information (for example, age and gender) using the user terminal 200 and transmits the inquired user information to the main server 300 at step S630. The transmitted user information is stored in the user information database 350 at step S640.

In another example, user information has been already stored in the user terminal 200. In this case, the previously stored user information is transmitted to the main server 300 without requiring the user to separately input the user information to the user terminal 200 at step S630, and the user information is stored in the user information database 350 at step S640.

When it is determined that the user information has been transmitted, a coupon stored in the coupon database 340 is transmitted to the user terminal 200 at step S650.

In still another example, the user information may be transmitted via another means using email, other than the user terminal 200.

Using the second embodiment, the user may obtain economic benefits in the purchase of a product through the provision of part of his or her information.

Furthermore, the provider may obtain data effective to product marketing through the accumulation of user information.

For example, the purchase details of the user are accumulated and stored in the user information database 350, and information about a location where a specific product has been used and user age and gender (in the case of user consent) are stored with respect to the specific product. From the standpoint of the provider, locations at which a specific product is chiefly used can be determined, and also an age group and a gender who chiefly use the product can be determined solely or in combination. It will be apparent that this can play an effective and active role in the establishment of a marketing strategy for the product.

Although the preferred embodiments of the present invention have been described above, the present invention is not limited to the above-described specific embodiments. That is, those having ordinary knowledge in the art to which the present invention pertains can make a plurality of variations and modifications to the present invention without departing from the spirit and scope of the attached claims. All appropriate variations and modification should be construed as falling within the scope of the present invention.

## Claims

1. A method for providing product information, comprising the steps of:
(a) receiving, by a user terminal, a predetermined signal from a signal element of a product, and checking, by the user terminal, information regarding location of the user terminal;
(b) transmitting, by the user terminal, the received signal and the location information to a main server;
(c) determining, by the main server, whether a genuine product signal corresponding to the transmitted signal is present and sale location information corresponding to the transmitted location information is present; and
(d) if the corresponding genuine product signal and the corresponding sale location information are present, transmitting, by the main server, product information of the product to the user terminal.

2. The method of claim 1, wherein step (d) comprises the step of:
(d') if the corresponding genuine product signal is present but the corresponding sale location information is not present, transmitting, by the main server, a distribution channel warning message to the user terminal.

3. The method of claim 1, wherein step (d) comprises the step of:
(d") if the corresponding genuine product signal is not present but the corresponding sale location information is present, transmitting, by the main server, a forgery warning message to the user terminal.

4. The method of claim 1, wherein step (d) comprises the step of:
(d"') if neither the corresponding genuine product signal nor the corresponding sale location information is present, transmitting, by the main server, both distribution channel and forgery warning messages to the user terminal.

5. The method of claim 1, further comprising, before step (a), the step of:
(0) providing, by a provider terminal, a genuine product signal and sale location information to the main server.

6. The method of claim 1, further comprising, after step (d), the step of:
(e) outputting the transmitted product information to a display unit of the user terminal;
wherein the product information comprises any one of a product description, warnings for use, ingredients, a production date, an expiration date, and an advertisement.

7. The method of claim 6, further comprising, after step (e), the step of:
(f) transmitting, by the user terminal, information about whether the product has been purchased and location information to a provider terminal.

8. The method of claim 2, further comprising, after step (d), the steps of:
(e') outputting the transmitted distribution channel warning message to a display unit of the user terminal; and
(f') transmitting, by the user terminal, a product sale location change request to a provider terminal.

9. The method of any one of claims 1 to 8, further comprising, after step (d), the steps of:
(g) inquiring, by the main server, of the user terminal about content to provision of user information;
(h) if the user terminal transmits a consent signal to the main server in response to the inquiry, inquiring, by the main server, of the user terminal about the user information;
(i) transmitting, by the user terminal, the user information to the main server; and
(j) transmitting, by the main server, a coupon to the user terminal.

10. The method of claim 9, wherein step (i) comprises the steps of:
inputting the user information to the user terminal; and
transmitting the input user information to the main server.

11. The method of claim 9, wherein:
user information is previously input to and stored in the user terminal; and
step (i) comprises the step of checking, by the user terminal, the previously input and stored user information for information corresponding to the user information inquired at step (h), and the step of transmitting, by the user terminal, the corresponding information to the main server.

12. The method of claim 9, further comprising the steps of:
(k) if it is determined at step (d) that the corresponding genuine product signal and the corresponding sale location information are present, storing the location information in a user information database with the location information mapped to the product information of the product; and
(1) if the user terminal transmits a consent signal to the main server in response to the inquiry at step (h), storing the user information transmitted at step (i) in the user information database with the user information mapped to the product information of the product.
